# EUROPÄISCHE PATENTANMELDUNG

(11) **EP 2 251 858 A1**
(43) Veröffentlichungstag der Anmeldung: **17.11.2010**
(21) Anmeldenummer: 10161008.7
(22) Anmeldetag: 26.04.2010
(51) Int. Cl.: G10K 11/168, B32B 5/24

(54) **Luftschall isolierender Materialaufbau**

(30) Priorität: 12.05.2009 DE 102009020996
(71) Anmelder: AKsys GmbH, 67547 Worms (DE)
(72) Erfinder: Eggers, Lutz, D-33659 Bielefeld (DE); Horst, Guido, D-32257 Bünde (DE)
(74) Vertreter: Geitz Truckenmüller Lucht

(57) **Zusammenfassung**

Die Erfindung betrifft einen Luftschall isolierenden, mehrschichtigen, durch Thermoverformen verpressbaren bzw. zu verpressenden Materialaufbau (20), der eine aus einem thermoverformbaren offenzelligen Polyurethan-Leicht-Schnittschaum (25) gebildete erste Schallabsorber-Schicht (31) umfasst und der eine aus einem thermoverformbaren Faservlies (26) aus thermoplastisch gebundenen Baumwollfasern (29) gebildete zweite Schallabsorber-Schicht (32) umfasst und wobei die erste Schallabsorber-Schicht (31) und die zweite Schallabsorber-Schicht (32) über eine zwischen diesen beiden Schichten (31, 32) ausgebildete bzw. sich ausbildende, vorzugsweise aus separat ein- bzw. aufgebrachtem Material bestehende, Klebeschicht stoffschlüssig miteinander derart verbindbar sind bzw. verbunden sind oder werden, dass sowohl die erste Schallabsorber-Schicht (31) als auch die zweite Schallabsorber-Schicht (32) direkt mit der Klebeschicht zu einem nur aus diesen drei Schichten (31, 32, 33) ausgebildeten dreischichtigen Materialaufbau (20) verklebbar sind bzw. verklebt sind oder werden.

## Beschreibung

Die Erfindung betrifft einen Luftschall isolierenden, mehrschichtigen, durch Thermoformen verpressbaren bzw. zu verpressenden Materialaufbau.

Derartige Materialaufbauten sind in den vielfältigsten Varianten mit einer Vielzahl von Schichten mit unterschiedlichsten Materialzusammensetzungen allgemein bekannt geworden.

Aus der DE 201 11 662 U1 ist eine Akustikabdeckung für zumindest einen Teil eines Verbrennungsmotors in Form einer Motorölwanne bekannt geworden. Die Akustikabdeckung umfasst ein im Querschnitt U-förmiges, aus nachwachsenden Rohstoffkomponenten hergestelltes Tragteil, einen damit verbundenen Schallabsorber und mindestens ein Befestigungselement. Das Tragteil besteht aus einem gepressten mehrlagigen Faservlies mit einem Flächengewicht von 1.200 g/m². Das mehrlagige gepresste Faservlies besteht auf der Außenseite aus einer Lage aus thermoplastisch gebundenen Naturfasern und besteht auf der Innenseite aus einer Lage aus synthetischen Fasern. Die außenseitige Lage besteht aus einer Fasermischung aus 80 % Polypropylenfaser und 20 % Kenaf, Hanf, Sisal oder Flachsfasern. Die Lage der Innenseite besteht aus einer Mischung aus 30 % Polypropylenfasern und 70 % Polyesterfasern. Das Faservlies wird unter thermischer Belastung und unter hohem Druck in die gewünschte Form gepresst, so dass bei dem verpressten Tragteil eine Endstärke von 1 bis 10 mm, vorzugsweise zwischen 2 und 5 mm erreicht und demgemäß ein selbsttragendes Formteil erhalten wird. Der Schallabsorber besteht aus mindestens einem technischen Vliesstoff oder aus mindestens einem Polyurethan-, Polyolefin- oder Melaminharz-Schaumkunststoff, bevorzugt aus einem Polyurethan-Schaumkunststoff mit einem Raumgewicht von 10 kg/m³ bis 250 kg/m³, insbesondere 35 kg/m³. Der Schallabsorber ist mit dem Tragteil durch Ultraschallschweißen verbunden. Durch Kaschieren von Folien, Vliesstoffen oder Beschichtungen lassen sich bei dem Schallabsorber spezielle Oberflächengüten herstellen. Durch das starke Verpressen des mehrlagigen Faservlies wird erreicht, dass das Tragteil keine Lärmübertragungen zulässt, so dass mit dem Tragteil zwar eine Schalldämmung, aber keine nennenswerte Schallabsorption erreicht werden kann. Der inhomogene zweilagige Aufbau des mehrlagigen Faservlies ist aufwändig und teuer in der Herstellung.

Aus der DE 20 2006 009 245 U1 ist eine Luftschall absorbierende, selbsttragende Motorraumverkleidung in Form einer Motorhaubenverkleidung für Kraftfahrzeuge bekannt geworden. Die mehrschichtige Motorhaubenverkleidung enthält eine relativ dünne, offenporige, luftdurchlässige Schaumstoffschicht und eine mit dieser direkt verbundene, relativ dicke Faserschicht aus mineralischen Fasern, vorzugsweise aus Glasfasern. Letztere bilden eine relativ lockere, weiche Schicht aus federnd-aufgelockert geschichteten mineralischen Fasern, so dass die Faserschicht leicht zusammenpressbar ist. Die Mineralfaserschicht ist deutlich dicker als die Schaumstoffschicht. Letztere weist eine Dicke von 2 bis 6 mm, vorzugsweise 4 mm, und eine Dichte von 5 bis 40 kg/m³, vorzugsweise 5 bis 25 kg/m³ auf. Im Unterschied dazu weist die Mineralfaserschicht eine mittlere Dicke von 7 bis 20 mm, beispielsweise 15 mm und ein Flächengewicht von 200 bis 800 g/m², beispielsweise 400 g/m² auf. Die Dicke der Schaumstoffschicht beträgt weniger als die Hälfte, vorzugsweise weniger als ein Drittel der Dicke der Faserschicht. Über die Art und Weise sowie Ausbildung der Verbindung der Mineralfaserschicht und der Schaumstoffschicht ist nichts offenbart. Auf der dem Fahrzeugmotor zugewandten Seite der Schaumstoffschicht ist diese mit einem dünnen Abdeckvlies versehen, die mit der Schaumstoffschicht verklebt ist. Ein entsprechendes Abdeckvlies ist auch auf der Rückseite der Faserschicht angeordnet. Gemäß einer Ausführungsvariante der Motorhaubenverkleidung kann die Schaumstoffschicht an ihrer dem Motor zugewandten Vorderseite eine integrale, hautartige, versinterte Oberflächenschicht und eine integrale restliche Teilschicht mit einer gegenüber der Oberflächenschicht geringeren Dichte aufweisen. Gemäß einer Weiterbildung dieser Ausführungsvariante kann zwischen der Schaumstoffschicht und der Mineralfaserschicht eine perforierte Folie angeordnet sein, die eine Vielzahl von Durchbrechungen mit einem mittleren Durchmesser im Bereich von 0,05 bis 4 mm aufweist. Diese Folie kann aus Polyethylen, Polyamid, Polyethylenterphthalat, Polypropylen oder Polyester hergestellt sein. Die mit diesen Motorhaubenverkleidungen erreichbare Schallisolation ist begrenzt.

Aus der DE-OS-37 34 239 ist eine mehrschichtige Stirnwandverkleidung für Automobile zur Abschirmung der Fahrgastzelle gegenüber dem Motorraum bekannt geworden. Diese weist auf ihrer zum Motorraum hinweisenden Seite eine schwer entflammbare Deckschicht in Form eines Deckvlies, eine darunter liegende Mineralfaserschicht aus duroplastisch gebundenen Mineralfasern, eine darunter angeordnete Baumwollvliesschicht aus duroplastisch oder thermoplastisch gebundenen Baumwollfasern und eine wiederum darunter liegende Masseschicht mit einem spezifischen Gewicht von 900 bis 2.500 kg/m³. Diese Masseschicht bildet die Masse eines zur Schalldämmung dienenden Feder-Masse-Systems und ist aus einem Polyurethan-Schaummaterial mit in entsprechender Menge zugefüllten Füllstoffen gebildet. Unter der Masseschicht ist an dieser eine weitere Deckschicht in Form eines Deckvlies vorgesehen, das an der Stirnwand im Motorraum befestigt ist. Die beiden Deckvliese sind auf Ihren dem Verbund zugewandten Seiten mit einer Klebeausrüstung versehen, die unter Temperatureinwirkung aufweicht. Die Mineralfaserschicht und die Baumwollvliesschicht werden beim Verpressen tatsächlich zu einem Verbund verformt. Diese Stirnwandverkleidung erfordert eine Masseschicht zur Schalldämmung, so dass ihr Gesamtflächengewicht bzw. ihr Gesamtgewicht vergleichsweise groß ist. Außerdem kann es, insbesondere bei erhöhten Temperaturen und/oder über der Zeit, zu einem Ablösen der Baumwollfaservliesschicht kommen.

Aus der DE 10 2006 027 230 A1 ist eine mehrschichtige, akustisch und thermisch wirkende Isolation eines Verbrennungsmotors eines Kraftfahrzeugs bekannt geworden, die wenigstens zwei oder drei miteinander vollflächig verbundene Schichten mit unterschiedlichen Strömungswiderständen umfasst. Eine dieser Schichten besteht aus einem Leichtschaum oder aus einem Baumwollfaservlies, gegebenenfalls mit (Glas-) Faserverstärkung und bildet eine leichte akustisch wirksame thermische Isolation. Eine zweite, vorzugsweise selbsttragende, Schicht besteht aus thermoplastisch oder duroplastisch gebundenen Fasermaterialien sowie aus offenzelligem Hartschaum. Die im Montagezustand freiliegende Oberfläche kann teilweise oder vollständig mit einer gegebenenfalls perforierten, insbesondere mikroperforierten, Metallfolie, insbesondere aus Aluminium, versehen sein, um eine verbesserte Wärmereflexion zu erzielen. Die erste Schicht aus Leichtschaum oder das Baumwollfaservlies weist eine Schichtdicke von 5 bis 50 mm und ein Flächengewicht von 0,04 bis 2,5 kg/m² auf und die zweite und gegebenenfalls dritte Schicht aus Fasermaterialien sowie aus Hartschaum weist eine Schichtdicke von 0,5 bis 8 mm und ein Flächengewicht von 0,2 bis 5 kg/m² auf. Über die Art und Weise sowie Ausbildung der Verbindung der wenigstens zwei bzw. drei Schichten ist nichts offenbart.

Aus der DE 20 2004 009 726 U1 ist eine schallabsorbierende selbsttragende Stirnwandverkleidung für Kraftfahrzeuge zur Abschirmung der Fahrgastzelle gegenüber dem Motorraum bekannt geworden. Die Stirnwandverkleidung hat einen aus zumindest bereichsweise verpresstem Vliesmaterial gebildeten Schallabsorber, der mit einem der Stirnwandverkleidung selbsttragende Eigenschaften verleihenden Kunststoff-Rahmen versehen ist. Dieser Kunststoffrahmen ist durch Hinterspritzen oder Hinterpressen des verpressten Vliesmaterials gebildet, besteht aus Polypropylen oder aus anderen thermoplastischen Kunststoffen, insbesondere aus glasfaserverstärkten Kunststoffen und weist mindestens ein integriertes Befestigungsmittel auf. Bei dem Vliesmaterial handelt es sich um ein auch als Bauschvlies bezeichnetes Volumenvlies. Das verpresste Vliesmaterial des Schallabsorbers besteht aus Polyesterfasern, vorzugsweise aus Polyethylenterphthalatfasern und weist ein Flächengewicht von 500 bis 1.200 g/m², vorzugsweise 800 bis 1.100 g/m², auf. Zur Herstellung des Schallabsorbers wird ein Zuschnitt oder Bahnabschnitt eines entsprechenden Volumenvlieses mit einer Ausgangsdicke von beispielsweise 70 bis 100 mm mittels eines Prägewerkzeuges zu einem dreidimensionalen Prägeteil verpresst. Die mittlere Dicke des so verpressten Schallabsorbers liegt im Bereich von 8 bis 25 mm, insbesondere im Bereich von 10 bis 20 mm. Das Volumenvlies enthält vorzugsweise Bikomponentenfasern, wobei eine Komponente eine Schmelzkleberfunktion hat. Während des Pressvorganges wird das Vliesmaterial in demjenigen Bereich, der nachfolgend zur Bildung des Rahmens mit Kunststoff hinterspritzt wird, so stark verdichtet, dass der fließfähige Kunststoff das Vliesmaterial nicht durchbricht. Das Hinterspritzen des Vliesmaterials führt zu einer stoffschlüssigen Verbindung zwischen dem als Schallabsorber wirkenden Vliesmaterial und dem Kunststoffrahmen. An seiner dem Motorraum zugewandten Seite kann der Schallabsorber partiell mit einem Hitzeschild, insbesondere mit einer mikroperforierten Aluminium-Folie, versehen sein. Die mit dieser Stirnwandverkleidung erreichbare Luftschallabsorption ist auf eine Seite der Stirnwandverkleidung begrenzt. Bedingt durch den erforderlichen Kunststoff-Rahmen weist diese Stirnwandverkleidung ein vergleichsweise großes Gewicht auf.

Aus der DE 10 2007 020 823 A1 ist eine leichte, schallisolierende Verkleidung für ein Karosserieteil eines Kraftfahrzeugs in Form einer Stirnwandverkleidung und ein Verfahren zu dessen Herstellung bekannt geworden. Die Stirnwandverkleidung umfasst eine Schallabsorberschicht, eine mit dieser direkt verbundene, im Wesentlichen luftdichte Schalldämmschicht und eine sich daran anschließende Schaumstoffschicht. Die Schallabsorberschicht besteht aus einem porösen luftdurchlässigen Absorber in Form eines Faservlies oder Schaumstoffes. Im Falle eines Faservlieses, besteht dieses aus Polyethylen- oder Polypropylen-Fasern, aus einer Mischung aus Polyethylen- und Polypropylen-Fasern, aus Baumwollfasern oder aus einer Mischung aus Polyethylen- und Naturfasern. Das Flächengewicht des Faservlieses liegt im Bereich von 100 bis 1.600 g/m², vorzugsweise 100 bis 1.200 g/m². Die Schichtdicke des Faservlieses beträgt 2 bis 30 mm, insbesondere 5 bis 20 mm. Die Schaumstoffschicht besteht aus Polyurethan-Weichschaum mit einer Rohdichte von 20 bis 60 kg/m³. Die Schalldämmschicht und die Schaumstoffschicht werden aus den gleichen Ausgangsmaterialien in einem einzelnen Prozessschritt hergestellt und sind in der fertigen Verkleidung integral stoffschlüssig miteinander verbunden. Die Verbindung der Schaumstoffschicht mit der Schallabsorberschicht erfolgt über die sich bei der Herstellung ausbildende im Wesentlichen luftdichte Hautschicht der Polyurethan-Weichschaumschicht, die stoffschlüssig mit der Schallabsorberschicht verbunden ist. Die auf diese Weise erreichbare Verbindungsqualität ist verfahrensbedingt vergleichsweise starken Schwankungen unterworfen und diese Art der Verbindung ist auf die dort eingesetzten Materialkombinationen beschränkt.

Es ist eine Aufgabe der Erfindung, einen Luftschall isolierende, mehrschichtigen, durch Thermoformen verpressbaren bzw. zu verpressenden Materialaufbau aus einer Leichtschaumschicht und aus einer Faservliesschicht zur Verfügung zu stellen, der ein niedriges Flächengewicht und Gewicht aufweist und der trotzdem eine gute Schallisolation ermöglicht bzw. bewirkt, der eine vergleichsweise hohe Temperaturbeständigkeit aufweist, bei dem die Leichtschaumschicht und die Faservliesschicht fest und dauerhaft miteinander verbindbar bzw. verbunden sind und mit dem sich Schallisolationsbauteile mit einem minimalen Gewicht mit bekannten Verfahren, insbesondere in einem Einstufenverfahren, mit gegebenenfalls vorhandenen Technologien, Maschinen und Anlagen, besonders günstig herstellen lassen.

Diese Aufgabe kann überraschenderweise durch die Merkmale des Anspruches 1, insbesondere durch einen Luftschall isolierenden, mehrschichten, durch Thermoformen verpressbaren bzw. zu verpressenden, vorzugsweise als Halbzeug ausgebildeten, Materialaufbau, insbesondere in Form eines Faser-Schnittschaum-Absorbers, gelöst werden, der einen Schnittschaum-Absorber und einen Faser-Absorber umfasst und der entweder eine aus einem thermoverformbaren, offenzelligen bzw. offenporigen, insbesondere luftdurchlässigen, Polyurethan-Leicht-Schnittschaum gebildete erste Schallabsorber-Schicht umfasst, die ein Raumgewicht von 10 bis 15 kg/m³ und eine Schichtdicke von mehr als 6 mm, insbesondere 7 bis 30 mm, vorzugsweise 15 bis 25 mm, aufweist, oder eine aus einem thermoverformbaren, offenzelligen bzw. offenporigen, insbesondere luftdurchlässigen, Melaminharz-Leicht-Schnittschaum gebildete erste Schallabsorber-Schicht umfasst, die ein Raumgewicht von 6 bis 15 kg/m³ und eine Schichtdicke von mehr als 6 mm, insbesondere 7 bis 30 mm, vorzugsweise 15 bis 25 mm, aufweist, und der entweder eine aus einem thermoverformbaren Faservlies aus thermoplastisch oder duroplastisch gebundenen Baumwollfasern, Polyesterfasern oder Baumwoll-Polyester-Mischfasern gebildete zweite Schallabsorber-Schicht umfasst, die ein Flächengewicht von 700 bis 1.500 g/m² und eine Schichtdicke von mindestens 5 mm aufweist, oder eine aus einem thermoverformbaren Faservlies aus duroplastisch gebundenen Mineralfasern gebildete zweite Schallabsorber-Schicht umfasst, die ein Flächengewicht von 500 bis 1.500 g/m² und eine Schichtdicke von mindestens 5 mm aufweist, und wobei die aus Leicht-Schnittschaum bestehende erste Schallabsorber-Schicht und die aus Faservlies bestehende zweite Schallabsorber-Schicht über eine zwischen diesen beiden Schichten ausgebildete bzw. sich ausbildende Klebeschicht, die nicht durch das zur Ausbildung der ersten Schallabsorber-Schicht dienende Material, ggf. auch nicht durch das zur Ausbildung der zweiten Schallabsorber-Schicht dienende Material, ausgebildet ist bzw. wird und/oder die aus separat ein- bzw. aufgebrachtem Material besteht, stoffschlüssig miteinander derart verbunden sind oder werden, dass sowohl die aus Leicht-Schnittschaum bestehende erste SchallabsorberSchicht als auch die aus Faservlies bestehende zweite Schallabsorber-Schicht direkt mit der Klebeschicht zu einem nur aus diesen drei Schichten ausgebildeten dreischichtigen Materialaufbau verklebt sind bzw. werden. Ein Schnittschaum im Sinne dieses Schutzrechts meint einen fertig geschäumten und ausgeschnittenen Schaumstoffkörper. Klebeschicht im Sinne dieses Schutzrechts bedeutet zum einen, dass diese Schicht von vorne herein ihre Klebefunktion ausüben kann bzw. ausübt, also insbesondere selbstklebend sein kann, bedeutet aber auch zum anderen, dass alternativ oder zusätzlich vorgesehen sein kann, dass diese Schicht erst nach ihrem Auf- bzw. Einbringen zwischen die erste Schallabsorber-Schicht und die zweite Schallabsorber-Schicht ihre Klebefunktion ausüben kann bzw. ausübt, also beispielsweise erst nach einer Erwärmung auf erhöhte Temperaturen, insbesondere nach einem Aufschmelzen dieser Schicht.

Durch die vorstehenden Maßnahmen lässt sich ein sehr niedriges Gesamt-Flächengewicht und Gewicht des Materialaufbaus bei trotzdem guter Schallisolation erreichen, gegebenenfalls auch in Verbindung mit schalldämmenden Eigenschaften. Überraschenderweise ist bei einem derartigen Aufbau kein Resonanzeinbruch in der Schalldämmkurve zu beobachten. Aus einem derartigen Materialaufbau lassen sich Schallisolations-Bauteile herstellen, die je nach erfindungsgemäßem Materialaufbau bzw. erfindungsgemäßer Materialkombination bis zu 200 Grad dauerhaft einsetzbar sind. Insgesamt lässt sich mit einem derartigen Materialaufbau eine hohe Temperaturbeständigkeit, auch bei erhöhten Temperaturen, beispielsweise im Motorraum, erreichen. Ein derartiger Materialaufbau ermöglicht die Herstellung von Schallisolationsbauteilen mit einem besonders niedrigen bzw. minimalen Gewicht. Bei einem derartigen Materialaufbau wirkt nicht nur die Leichtschaumschicht als Absorber sondern auch die Faservlies-Schicht, so dass ein derartiger Materialaufbau bzw. die daraus hergestellten Schallisolationsformteile eine beidseitige Schallabsorption bewirken. Ein derartiger Materialaufbau lässt sich besonders kostengünstig mit bekannten Herstellungsverfahren herstellen und mit ebenfalls bekannten Verfahren in einem Einstufenprozess ("One-Shot") zu einem Luftschall-Isolations-Verbundformteil thermisch verformen, insbesondere verpressen. Dabei können vorhandene Technologien, Maschinen und Anlagen genutzt werden, so dass nur geringe Investitionskosten anfallen. Ein derartiger Sandwichaufbau ermöglicht eine selbsttragende Ausführung. Der erfindungsgemäße Materialaufbau weist eine sehr gute Akustik gegenüber vorbekannten Schallisolationsbauteilen mit einem vergleichbaren Gewicht oder sogar deutlich höheren Gewichten auf.

In vorteilhafter Weiterbildung kann vorgesehen sein, dass die aus Leicht-Schnittschaum bestehende erste Schallabsorber-Schicht einlagig und/oder über ihre Schichtdicke bzw. ihren Querschnitt betrachtet aus einem einheitlichen bzw. homogenen Leicht-Schaum-Material, vorzugsweise mit gleichmäßiger Dichte, ausgebildet ist und/oder dass die aus Faservlies bestehende zweite Schallabsorber-Schicht einlagig und/oder über ihre Schichtdicke bzw. ihren Querschnitt betrachtet, aus einem einheitlichen bzw. homogenen Faservlies-Material, vorzugsweise mit gleichmäßiger Dichte, ausgebildet ist. Dies ermöglicht eine besonders kostengünstige Herstellung bei trotzdem besonders guter Schallisolation.

Bei der Klebeschicht kann es sich um eine duroplastische oder thermoplastische Klebeschicht handeln. Insbesondere im Falle einer duroplastischen Klebeschicht kann es sich um eine Sprüh-Klebeschicht bzw. um eine aufgesprühte Klebeschicht handeln. Die Klebeschicht kann auf die erste Schallabsorberschicht und/oder die zweite Schallabsorber-Schicht aufgesprüht sein bzw. werden. Dies ermöglicht einerseits einen besonders dünnen Materialauftrag in Verbindung mit einem besonders geringen Gewicht einer derartigen Klebeschicht und ermöglicht außerdem eine besonders gute großflächige und gegebenenfalls durchgehende Benetzung der mit der anderen Schallabsorber-Schicht zu verklebenden Schallabsorber-Schicht, gegebenenfalls auch eine großflächige, durchgehende, geschlossene Klebeschichtausbildung.

In bevorzugter Ausgestaltung kann die duroplastische Klebeschicht aus Phenolharz oder aus Melaminharz gebildet sein. Im Falle einer thermoplastischen Klebeschicht kann diese an- bzw. auf die erste Schallabsorber-Schicht und an bzw. auf die zweite Schallabsorber-Schicht an- bzw. aufgeschmolzen sein bzw. werden. Ferner kann vorgesehen sein, dass die thermoplastische Klebeschicht mit der ersten Schallabsorber-Schicht und/oder mit der zweiten Schallabsorber-Schicht verschmolzen ist bzw. verschmolzen wird.

Gemäß einer besonders vorteilhaften Ausführungsvariante kann vorgesehen sein, dass die thermoplastische Klebeschicht durch An- bzw. Aufschmelzen einer zwischen der ersten Schallabsorber-Schicht und der zweiten Schallabsorber-Schicht angeordneten thermoplastischen Folie, insbesondere einer Polyethylenfolie oder einer Polypropylenfolie, ausgebildet ist bzw. wird. Derartige thermoplastische Folien stehen besonders kostengünstig zur Verfügung und lassen sich besonders einfach und kostengünstig handhaben sowie verarbeiten und ermöglichen bzw. bewirken nach ihrem An- bzw. Aufschmelzen eine besonders feste und dauerhafte Verbindung zwischen der ersten Schallabsorber-Schicht und der zweiten Schallabsorber-Schicht. Bevorzugt kann die thermoplastische Folie vor dem An- bzw. Aufschmelzen frei von für eine Schall- bzw. Luftdurchlässigkeit der Folie bestimmten Perforationen oder perforationsfrei bzw. geschlossen, gegebenenfalls ausgenommen von Befestigungsperforationen, ausgebildet sein. Derartige thermoplastische Folien sind ganz besonders kostengünstig verfügbar und verarbeitbar und ermöglichen eine vollflächige und durchgehende Benetzung sowie Verklebung der ersten Schallabsorberschicht und der zweiten Schallabsorberschicht.

Demgemäß kann vorgesehen sein, dass die Klebeschicht groß- oder vollflächig und/oder im Wesentlichen durchgehend, insbesondere vollständig durchgehend, bzw. im Wesentlichen perforationsfrei, insbesondere vollständig perforationsfrei zwischen der ersten Schallabsorber-Schicht und der zweiten Schallabsorber-Schicht ausgebildet ist. Die Klebeschicht kann also als eine geschlossene Klebeschicht ausgebildet sein.

Die Klebeschicht kann bevorzugt im Wesentlichen luftdurchlässig ausgebildet sein. Sie kann jedoch auch luftundurchlässig ausgebildet sein.

Gemäß einer bevorzugten Ausführungsvariante kann vorgesehen sein, dass die thermoplastische Bindung der Baumwollfasern, der Polyesterfasern oder der Baumwoll-Polyester-Mischfasern durch Aufschmelzen von mit diesen Fasern gemischten thermoplastischen Fasern, insbesondere von Bikomponentenfasern bzw. von wenigstens einer deren Komponenten, erreicht ist bzw. erreicht wird. Der Einsatz von Bikomponentenfasern hat sich insbesondere bei der Verwendung von Baumwollfasern für das Faservlies der zweiten Schallabsorber-Schicht als besonders vorteilhaft herausgestellt, zumal durch ein Aufschmelzen der Bikomponentenfasern bzw. wenigstens einer deren Komponenten eine erhöhte Verbindungsqualität zwischen der ersten Schallabsorber-Schicht und der zweiten Schallabsorber-Schicht erreicht werden kann.

Die aus Faservlies gebildete zweite Schallabsorber-Schicht kann aus Glasfasern bestehen bzw. Glasfasern enthalten und ein Flächengewicht von 600 bis 1.000 g/m² aufweisen. Alternativ und bevorzugt kann die aus Faservlies gebildete zweite Schallabsorber-Schicht aus mit Baumwollfasern und thermoplastischen Fasern, insbesondere Bikomponentenfasern, gemischten Mischfasern bestehen und ein Flächengewicht von 700 bis 1.000 g/m² aufweisen.

Für bestimmte Anwendungen kann es vorteilhaft sein, wenn die aus Leicht-Schnittschaum gebildete erste Schallabsorber-Schicht und/oder wenn die aus Faservlies gebildete zweite Schallabsorber-Schicht auf ihrer von der Klebeschicht weg weisenden Seite mit wenigstens einer dünnen Abdeckschicht kaschiert ist bzw. sind oder wird bzw. werden, die eine Schichtdicke von 0,01 bis 2 mm aufweisen kann. Bei derartigen Abdeckschichten kann es sich um ein, vorzugsweise textiles, Abdeckvlies handeln, das eine Schichtdicke von 0,5 bis 2 mm aufweisen kann. Alternativ oder zusätzlich kann vorgesehen sein, dass es sich bei der Abdeckschicht, vorzugsweise zumindest teilweise, um eine unperforierte oder perforierte, vorzugsweise mikroperforierte, Aluminiumfolie handelt, die eine Schichtdicke von 0,01 bis 1,0 mm aufweisen kann. Eine derartige Aluminiumfolie kann auf der von der Klebeschicht wegweisenden Außenseite des Abdeckvlieses oder der Abdeckvliese aufkaschiert, vorzugsweise direkt mit dem Abdeckvlies verbunden, sein bzw. werden. Es versteht sich, dass eine derartige Aluminiumfolie alternativ oder zusätzlich auf bzw. über der aus Leicht-Schnittschaum gebildeten ersten Schallabsorber-Schicht und/oder auf bzw. über der aus Faservlies gebildeten zweiten Schallabsorber-Schicht angebracht sein kann. Die Aluminiumfolie kann ggf. nur in bestimmten Bereichen bzw. nur an lokalen Stellen aufkaschiert sein (Hot-Spots). Das bzw. das jeweilige Abdeckvlies kann polyesterhaltig und/oder polyacrylnitrilhaltig ausgebildet sein und ein Flächengewicht von 60 bis 150 g/m², insbesondere von 60 bis 100 g/m², aufweisen. Bevorzugt kann das bzw. das jeweilige Abdeckvlies aus Polyesterfasern oder/oder Polyacrylonitrilfasern, beispielsweise aus Panox® gebildet sein und ein Flächengewicht von 60 bis 150 g/m², insbesondere von 60 bis 100 g/m², aufweisen.

Der erfindungsgemäße Materialaufbau kann durch Thermoverformen zu einem Faser-Schaum-Schallabsorber-Verbundformteil bzw. zu einem Luftschall-Isolations-Verbundformteil verformt, insbesondere verpresst werden. Zu diesem Zwecke kann der erfindungsgemäße Materialaufbau in ein Heißpress-Formwerkzeug eingelegt werden und dort bei erhöhten Temperaturen zu dem Verbundformteil verpresst werden. Alternativ kann der erfindungsgemäße Materialaufbau zunächst auf erhöhte Temperaturen, insbesondere auf 180 bis 200 Grad Celsius, vorgewärmt werden, beispielsweise in einem Umluftofen oder durch Anwendung von Kontaktwärme, und kann anschließend im vorgewärmten Zustand in ein kaltes oder warmes Formwerkzeug eingelegt und dort zu einem Verbund-Formteil verpresst werden. Eine Verarbeitung nach dem erstgenannten Verfahren kann insbesondere beim Einsatz von Phenolharz gebundener Faservliese zur Ausbildung der zweiten Schallabsorber-Schicht erfolgen.

In beiden Fällen ist es von besonderem Vorteil, wenn der erfindungsgemäße Materialverbund als eine, vorzugsweise ausgeschnittene oder aus dem Halbzeug bestehende, Platine in das Formwerkzeug zur Weiterverarbeitung zu einem Faser-Verbundformteil eingelegt wird.

Die Erfindung betrifft auch ein Luftschall-Isolations-Verbundformteil, das aus dem erfindungsgemäßen Materialaufbau, insbesondere nach wenigstens einem der Ansprüche 1 bis 22, oder nach wenigstens einem bzw. einer der vorstehenden Merkmale und/oder Maßnahmen, in einem Thermoformverfahren, insbesondere in einem Thermoformpressverfahren, hergestellt ist bzw. wird.

Gemäß einer bevorzugten Anwendung kann vorgesehen sein, dass das Luftschall-Isolations-Verbundformteil als eine Stirnwandverkleidung für Kraftfahrzeuge zur Luftschall-Isolation eines Fahrzeugraumes gegenüber einem Motorraum gestaltet bzw. ausgebildet ist.

Die Erfindung betrifft auch die Verwendung des erfindungsgemäßen Materialaufbaus, insbesondere nach wenigstens einem der Ansprüche 1 bis 15 und/oder nach wenigstens einem bzw. einer der vorstehenden Merkmale und/oder Maßnahmen, zur Luftschall-Isolation in Kraftfahrzeugen, insbesondere zur Luftschall-Isolation einer zwischen einem Fahrgastraum und einem Motorraum angeordneten Stirnwand auf deren zum Fahrgastraum weisenden Innenseite und/oder auf deren zum Motorraum hin weisenden Außenseite oder zur Luftschall-Isolation des Motorraumes eines Kraftfahrzeugs oder zur Luftschall-Isolation des Motorraumes eines Kraftfahrzeugs oder zur Luftschall-Isolation von im Motorraum eines Kraftfahrzeugs befindlichen Komponenten.

Es versteht sich, dass die vorstehenden Merkmale und Maßnahmen im Rahmen der Ausführbarkeit sowohl einzeln als auch in beliebiger Kombination miteinander kombinierbar sind.

Weitere Vorteile, Merkmale und Gesichtspunkte der Erfindung gehen aus den Ansprüchen und aus dem nachfolgenden Beschreibungsteil hervor, in dem ein bevorzugtes Ausführungsbeispiel der Erfindung anhand einer Zeichnung beschrieben ist.

Es zeigt:

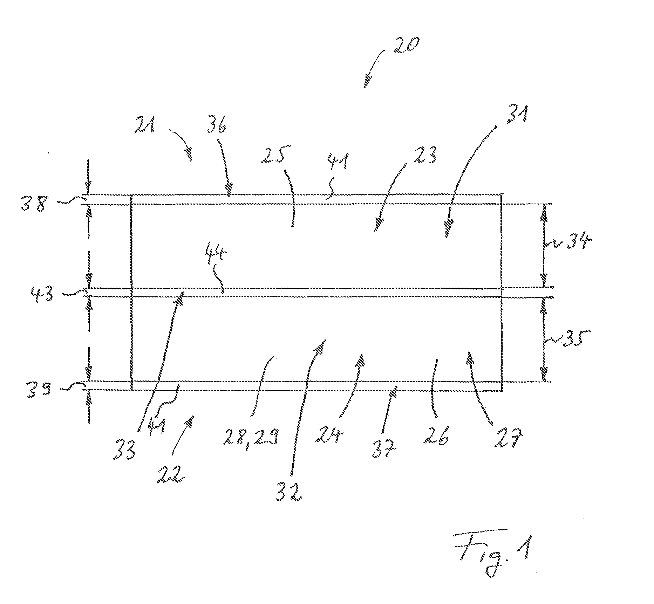

- Fig. 1: einen Querschnitt eines erfindungsgemäßen Materi- alaufbaus in schematischer Darstellung.

Der in Figur 1 gezeigte Luftschall isolierende Materialaufbau 20 umfasst drei Schichten 31, 32, 33. Bei der ersten Schicht 31 und bei der zweiten Schicht 32 handelt es sich jeweils um eine Schallabsorber-Schicht 31, 32 und bei der dritten Schicht 33 handelt es sich um eine zwischen der ersten Schallabsorber-Schicht 31 und der zweiten Schallabsorber-Schicht 32 angeordnete bzw. ausgebildete Klebeschicht 33. Bei der Klebeschicht 33 handelt es sich hier um eine, vorzugsweise nicht selbstklebende, thermoplastische Folie 44, insbesondere aus Polyethylen oder Polypropylen.
Diese Folie wird beim Verpressen des Materialaufbaus 20 unter Wärme bzw. bei erhöhten Temperaturen aufgeschmolzen, wobei im Zuge dessen ein Verkleben der ersten Schallabsorber-Schicht 31 und der zweiten Schallabsorber-Schicht 32 zu einem nur aus den drei Schichten 31, 32, 33 ausgebildeten dreischichtigen Materialaufbau bewirkt wird, so dass die erste Schallabsorber-Schicht 21 und die zweite Schallabsorber-Schicht 22 dann jeweils stoffschlüssig direkt mit der Klebeschicht 33 unter Ausbildung eines schallisolierenden Faser-Schnittschaum-Absorbers miteinander verbunden sind.

Bei dem in Figur 1 gezeigten Materialaufbau 20 handelt es sich um ein als Platine 22 vorgefertigtes, insbesondere zugeschnittenes, Halbzeug 21, das durch Thermoformen, vorzugsweise Thermoformpressen, zu einem Luftschall-Isolations-Verbundformteil verpresst werden kann.

Bei der ersten Schallabsorber-Schicht 31 handelt es sich um einen Schnittschaum-Absorber 23. Dieser besteht hier aus einem thermoverformbaren, offenzelligen Polyurethan-Leicht-Schnittschaum. Der Schnittschaum weist ein Raumgewicht von 10 bis 15 kg/m³ und eine Schichtdicke 34 von mehr als 6 mm, insbesondere 7 bis 30 mm, bevorzugt 15 bis 25 mm, auf.

Bei der zweiten Schallabsorber-Schicht 32 handelt es sich hier um ein thermoverformbares Faservlies 26 aus thermoplastisch gebundenen Baumwollfasern 28, die mit wenigstens eine aufschmelzbare Komponente aufweisenden Bikomponentenfasern 29 zu einem Fasergemisch 27 gemischt sind. Diese zweite Schallabsorber-Schicht 32 weist ein Flächengewicht von 700 bis 1.000 g/m² und eine Schichtdicke 35 von mindestens 5,0 mm, beispielsweise 15 bis 25 mm, auf.

Sowohl die aus Polyurethan-Leicht-Schnittschaum 25 bestehende erste Schallabsorber-Schicht 31 als auch die aus Faservlies 26 bestehende zweite Schallabsorber-Schicht 32 sind einlagig und über ihre Schichtdicke 34, 35 bzw. ihren Querschnitt betrachtet aus einem einheitlichen, homogenen Material mit einer im Wesentlichen gleichmäßigen Dichte ausgebildet.

In dem gezeigten Ausführungsbeispiel ist sowohl die aus Polyurethan-Leicht-Schnittschaum 25 gebildete erste Schallabsorber-Schicht 31 als auch die aus Faservlies 26 gebildete zweite Schallabsorber-Schicht 32, jeweils auf ihrer von der Klebeschicht 33 weg weisenden Seite, mit einer dünnen Abdeckschicht 36, 37 kaschiert, die eine Schichtdicke von 0,01 bis 2 mm aufweist.

Die thermoplastische Folie 44 ist vor ihrem An- bzw. Einbringen in den Materialaufbau 20 und vor ihrem An- bzw. Aufschmelzen perforationsfrei bzw. als geschlossene, durchgehende Schicht ausgebildet. Die aus dieser thermoplastischen Folie 44 gebildete Klebeschicht 33 ist bzw. wird vollflächig und durchgehend sowie perforationsfrei zwischen der ersten Schallabsorber-Schicht 31 und der zweiten Schallabsorber-Schicht 32 ausgebildet. Die thermoplastische Folie 44 bzw. die damit ausgebildete Klebeschicht 33 ist hier luftundurchlässig ausgebildet.

Bei den Abdeckschichten 36, 37 handelt es sich hier jeweils um ein Abdeckvlies 36, 37, das eine Schichtdicke von 0,5 bis 2 mm aufweist. Anstelle eines Abdeckvlieses kann jedoch auch eine unperforierte oder perforierte, vorzugsweise mikroperforierte, Aluminiumfolie vorgesehen sein, die eine Schichtdicke von 0,01 bis 1,0 mm aufweisen kann. Bevorzugt kann jedoch eine derartige Aluminiumfolie außen auf das jeweilige Abdeckvlies 36, 37 aufgebracht, insbesondere aufkaschiert, sein bzw. werden. Die Abdeckvliese 36, 37 sind hier aus Polyesterfasern gebildet und weisen jeweils ein Flächengewicht von 60 bis 150 g/m², insbesondere von 60 bis 100 g/m², auf.

Der in Figur 1 gezeigte Luftschall isolierende, mehrschichtige, durch Thermoformen verpressbare bzw. zu verpressende und hier als Halbzeug 21 in Form einer ausgeschnittenen Platine 22 ausgebildete Materialaufbau 20 kann unter Anwendung eines Thermoformpressverfahrens zu einem Faser-Schaum-Schallabsorber-Verbundformteil bzw. Luftschall-Isolations-Verbundformteil verpresst werden. Bei dem gewählten Verbundaufbau und den gewählten Materialien kann der Materialaufbau 20 in einem bevorzugten Verarbeitungsverfahren zunächst auf erhöhte Temperaturen, beispielsweise auf 180 bis 200 Grad Celsius, vorgewärmt werden, beispielsweise in einem Umluftofen oder unter Anwendung von Kontaktwärme, und der vorgewärmte Materialaufbau 20 kann anschließend im vorgewärmten Zustand in ein vorzugsweise kaltes Formwerkzeug eingelegt und dort zu einem Faser-Schaum-Schallabsorber-Verbundformteil bzw. zu einem Faser-Schnittschaum-Absorber bzw. in einem Luftschall-Isolations-Verbundformteil verpresst werden (nicht gezeigt).

Das Faser-Schaum-Schallabsorber-Verbundformteil kann auch als ein Luftschall-Isolations-Verbundformteil bezeichnet werden. Ein derartiges Verbundformteil kann bevorzugt als eine ebenfalls nicht gezeigte Stirnwand-Verkleidung für Kraftfahrzeuge zur Luftschall-Isolation eines nicht gezeigten Fahrzeugraumes gegenüber einem ebenfalls nicht gezeigten Motorraum gestaltet sein. Der erfindungsgemäße Materialaufbau 20 bzw. das daraus durch Thermoverformen herstellbare Verbundformteil kann bevorzugt zur Luftschall-Isolation in Kraftfahrzeugen, insbesondere zur Luftschall-isolation einer zwischen einem Fahrgastraum und einem Motorraum angeordneten Stirnwand auf deren zum Fahrgastraum hinweisenden Innenseite und/oder auf deren zum Motorraum hinweisenden Außenseite oder zur Luftschall-Isolation des Motorraumes eines Kraftfahrzeugs oder zur Luftschall-Isolation von im Motorraum eines Kraftfahrzeugs befindlichen Komponenten verwendet bzw. eingesetzt werden (nicht gezeigt).

Die Erfindung kann zusammengefasst auch wie folgt dargestellt werden:
Die Erfindung betrifft einen Luftschall isolierenden, mehrschichtigen, durch Thermoverformen verpressbaren bzw. zu verpressenden Materialaufbau 20, der eine aus einem thermoverformbaren offenzelligen Polyurethan-Leicht-Schnittschaum 25 gebildete erste Schallabsorber-Schicht 31 umfasst und der eine aus einem thermoverformbaren Faservlies 26 aus thermoplastisch gebundenen Baumwollfasern 29 gebildete zweite Schallabsorber-Schicht 32 umfasst und wobei die erste Schallabsorber-Schicht 31 und die zweite Schallabsorber-Schicht 32 über eine zwischen diesen beiden Schichten 31, 32 ausgebildete bzw. sich ausbildende, vorzugsweise aus separat ein- bzw. aufgebrachtem Material bestehende, Klebeschicht stoffschlüssig miteinander derart verbindbar sind bzw. verbunden sind oder werden, dass sowohl die erste Schallabsorber-Schicht 31 als auch die zweite Schallabsorber-Schicht 32 direkt mit der Klebeschicht zu einem nur aus diesen drei Schichten 31, 32, 33 ausgebildeten dreischichtigen Materialaufbau 20 verklebbar sind bzw. verklebt sind oder werden.

### BEZUGSZEICHENLISTE

- 20: Materialaufbau
- 21: Halbzeug
- 22: Platine
- 23: Schnittschaum-Absorber
- 24: Faser-Absorber
- 25: (PUR-) Leicht- Schnittschaum
- 26: Faservlies/Faservlies- Material
- 27: Fasergemisch/Mischfasern
- 28: Baumwollfasern
- 29: Bikomponentenfasern
- 31: erste Schallabsorber- Schicht
- 32: zweite Schallabsorber- Schicht
- 33: Klebeschicht
- 34: Schichtdicke von 31
- 35: Schichtdicke von 32
- 36: Abdeckschicht/Abdeck- vlies
- 37: Abdeckschicht/Abdeck- vlies
- 38: Schichtdicke von 36
- 39: Schichtdicke von 37
- 41: Polyesterfasern
- 43: Schichtdicke von 23
- 44: Folie/Material

## Patentansprüche

1. Luftschall isolierender, mehrschichtiger, durch Thermoformen verpressbarer bzw. zu verpressender Materialaufbau (20), der einen Schnittschaum-Absorber (23) und einen Faser-Absorber (24) umfasst und der entweder
eine aus einem thermoverformbaren, offenzelligen Polyurethan-Leicht-Schnittschaum (25) gebildete erste Schallabsorber-Schicht (31) umfasst, die ein Raumgewicht von 10 bis 15 kg/m³ und eine Schichtdicke (34) von mehr als 6 mm, insbesondere 7 bis 30 mm, vorzugsweise 15 bis 25 mm, aufweist,
oder
eine aus einem thermoverformbaren, offenzelligen Melaminharz-Leicht-Schnittschaum gebildete erste Schallabsorber-Schicht umfasst, die ein Raumgewicht von 6 bis 15 kg/m³ und eine Schichtdicke von mehr als 6 mm, insbesondere 7 bis 30 mm, vorzugsweise 15 bis 25 mm, aufweist,
und der
entweder
eine aus einem thermoverformbaren Faservlies (26) aus thermoplastisch oder duroplastisch gebundenen Baumwollfasern (28), Polyesterfasern oder Baumwoll-Polyester-Mischfasern gebildete zweite Schallabsorber-Schicht (32) umfasst, die ein Flächengewicht von 700 bis 1500 g/m² und eine Schichtdicke (35) von mindestens 5,0 mm aufweist,
oder
eine aus einem thermoverformbaren Faservlies aus duroplastisch gebundenen Mineralfasern gebildete zweite Schallabsorber-Schicht umfasst, die ein Flächengewicht von 500 bis 1500 g/m² und eine Schichtdicke von mindestens 5,0 mm aufweist,
und
wobei die aus Leicht-Schnittschaum (25) bestehende erste Schallabsorber-Schicht (31) und die aus Faservlies (26) bestehende zweite Schallabsorber-Schicht (32) über eine zwischen diesen beiden Schichten (31, 32) ausgebildete bzw. sich ausbildende Klebeschicht (33), die nicht durch das zur Ausbildung der ersten Schallabsorber-Schicht (31) dienende Material, ggf. auch nicht durch das zur Ausbildung der zweiten Schallabsorber-Schicht (32) dienende Material, ausgebildet ist bzw. wird und/oder die aus separat ein- bzw. aufgebrachtem Material (44) besteht, stoffschlüssig miteinander derart verbunden sind bzw. werden, dass sowohl die aus Leicht-Schnittschaum (25) bestehende erste Schallabsorber-Schicht (31) als auch die aus Faservlies (26) bestehende zweite Schallabsorber-Schicht (32) direkt mit der Klebeschicht (33) zu einem nur aus diesen drei Schichten (31, 32, 33) ausgebildeten dreischichtigen Materialaufbau verklebt sind bzw. werden.

2. Materialaufbau nach Anspruch 1, **dadurch gekennzeichnet, dass** die aus Leicht-Schnittschaum (25) bestehende erste Schallabsorber-Schicht (31) einlagig und/oder über ihre Schichtdicke (34) betrachtet aus einem einheitlichen bzw. homogenen Leicht-Schaum-Material (25), vorzugsweise mit gleichmäßiger Dichte, ausgebildet ist und/oder
dass die aus Faservlies (26) bestehende zweite Schallabsorber-Schicht einlagig und/oder über ihre Schichtdicke (35) betrachtet aus einem einheitlichen bzw. homogenen Faservlies-Material (26), vorzugsweise mit gleichmäßiger Dichte, ausgebildet ist.

3. Materialaufbau nach Anspruch 1 oder 2, **dadurch gekennzeichnet, dass** es sich bei der Klebeschicht (33) um eine duroplastische oder thermoplastische Klebeschicht (33) handelt.

4. Materialaufbau nach einem der Ansprüche 1 bis 3,
**dadurch gekennzeichnet, dass** es sich bei der Klebeschicht um eine Sprüh-Klebeschicht handelt.

5. Materialaufbau nach einem der Ansprüche 1 bis 4,
**dadurch gekennzeichnet, dass** die Klebeschicht auf die erste Schallabsorber-Schicht und/oder die zweite Schallabsorber-Schicht aufgesprüht ist.

6. Materialaufbau nach einem der Ansprüche 3 bis 5,
**dadurch gekennzeichnet, dass** die duroplastische Klebeschicht aus Phenolharz oder aus Melaminharz gebildet ist.

7. Materialaufbau nach einem der Ansprüche 3 bis 5,
**dadurch gekennzeichnet, dass** die thermoplastische Klebeschicht (33) an- bzw. auf die erste Schallabsorber-Schicht (31) und an bzw. auf die zweite Schallabsorber-Schicht (32) an- bzw. aufgeschmolzen ist bzw. wird.

8. Materialaufbau nach einem der Ansprüche 3 bis 5 oder 7, **dadurch gekennzeichnet, dass** die thermoplastische Klebeschicht (33) mit der ersten Schallabsorber-Schicht (31) und/oder mit der zweiten Schallabsorber-Schicht (32) verschmolzen ist bzw. wird.

9. Materialaufbau nach einem der Ansprüche 3 bis 5, 7 oder 8, **dadurch gekennzeichnet, dass** die thermoplastische Klebeschicht (33) durch An- bzw. Aufschmelzen einer zwischen der ersten Schallabsorber-Schicht (31) und der zweiten Schallabsorber-Schicht (32) angeordneten thermoplastischen Folie (44), insbesondere einer Polyethylenfolie (44) oder einer Polypropylenfolie, ausgebildet ist bzw. wird.

10. Materialaufbau nach Anspruch 9, **dadurch gekennzeichnet, dass** die thermoplastische Folie (44) vor dem An- bzw. Aufschmelzen frei von für eine Schall- bzw. Luftdurchlässigkeit der Folie (44) bestimmten Perforationen oder perforationsfrei, ggf. ausgenommen von Befestigungsperforationen, ausgebildet ist.

11. Materialaufbau nach einem der Ansprüche 1 bis 10,
**dadurch gekennzeichnet, dass** die Klebeschicht (33) groß- oder vollflächig und/oder durchgehend bzw. perforationsfrei, zwischen der ersten Schallabsorber-Schicht (31) und der zweiten Schallabsorber-Schicht (32) ausgebildet ist bzw. wird.

12. Materialaufbau nach einem der Ansprüche 1 bis 11,
**dadurch gekennzeichnet, dass** die Klebeschicht (33) luftdurchlässig oder luftundurchlässig ist.

13. Materialaufbau nach einem der Ansprüche 1 bis 12,
**dadurch gekennzeichnet, dass** dieser entweder
in ein Heißpress-Formwerkzeug eingelegt und dort bei erhöhten Werkzeugtemperaturen zu einem Faser-Schaum-Schallabsorber-Verbundformteil verpresst wird
oder
zunächst auf erhöhte Temperaturen, insbesondere auf 180 bis 200 Grad Celsius vorgewärmt wird und anschließend im vorgewärmten Zustand in ein kaltes Formwerkzeug eingelegt und dort zu einem Faser-Schaum-Schallabsorber-Verbund-Formteil verpresst wird.

14. Materialaufbau nach einem der Ansprüche 1 bis 13,
**dadurch gekennzeichnet, dass** dieser als eine Platine (22) in das Formwerkzeug eingelegt wird.

15. Luftschall-Isolations-Verbundformteil, das aus dem Materialaufbau (20) nach einem der vorstehenden Ansprüche in einem Thermoformverfahren, insbesondere in einem Thermoformpressverfahren, hergestellt ist.
